# EUROPEAN PATENT SPECIFICATION

(11) **EP 3 918 123 B1**
(45) Date of publication and mention of the grant of the patent: **08.07.2026**
(21) Application number: 20748655.6
(22) Date of filing: 30.01.2020
(51) Int. Cl.: D06F 33/32, D06F 33/44, D06F 34/04, D06F 101/10, D06F 101/12, D06F 101/14, D06F 101/20, D06F 105/00, D06F 105/02, D06F 105/48, D06F 105/52

(54) **CONTROL METHOD OF A LAUNDRY TREATING APPARATUS AND CONTROL METHOD OF AN ONLINE SYSTEM CONTAINING THE LAUNDRY TREATING APPARATUS**
STEUERUNGSVERFAHREN FÜR EIN WÄSCHABEHANDLUNGSGERÄT UND STEUERUNGSVERFAHREN FÜR EIN ONLINE-SYSTEM AUFWEISEND EIN WÄSCHABEHANDLUNGSGERÄT
PROCÉDÉ DE COMMANDE D'UN APPAREIL DE TRAITEMENT DE LINGE ET PROCÉDÉ DE COMMANDE D'UN SYSTÈME EN LIGNE CONTENANT UN APPAREIL DE TRAITEMENT DE LINGE

(30) Priority: 01.02.2019 KR 20190013430
(43) Date of publication of application: 08.12.2021
(73) Proprietor: LG Electronics Inc., Seoul 07336 (KR)
(72) Inventor: BAE, Yonggyung, Seoul 08592 (KR); KWON, Baekeun, Seoul 08592 (KR)
(74) Representative: Ter Meer Steinmeister & Partner
(86) International application number: PCT/KR2020/001398
(87) International publication number: WO 2020/159240

(56) References cited:
- WO-A1-2018/161784
- KR-A- 20180 119 486
- KR-B1- 101 029 802
- US-A1- 2001 049 846
- US-A1- 2016 312 396
- US-A1- 2016 312 396
- US-A1- 2017 139 379
- US-A1- 2018 371 672

## Description

### Technical Field

The present invention relates to a control method of a laundry treating apparatus and to a control method of an online system containing the laundry treating apparatus.

### Background Art

In general, a laundry treating apparatus is a home appliance configured to perform such diverse treating processes that are related with clothes (e.g., washing, drying, deodorizing, wrinkle-removing and the like). The laundry treating apparatus means a concept including a washing machine for washing clothes, a dryer for drying wet clothes and a refresher for deodorizing the bad smell pervaded in clothes or removing wrinkles of clothes.

Also, laundry treating apparatuses can be classified into a top loading type and a front loading type based on a direction of laundry loading/unloading. A typical example of such a front loading type laundry treating apparatus is a drum washer or dryer. US 2017/139379 A1 relates to consumer appliances, or more specifically, to a system and method for providing cycle-based consumer feedback and control of one or more consumer appliances. US 2001/049846 A1 relates to optimizing the performance and convenience of consumer appliances, and more specifically to unique methods and systems for optimizing the ease of use and performance of consumer appliances such as a washing machine, a clothes dryer, an iron and an automated pet food dispenser. US 2016/312396 A1 relates to a method for controlling and optimising the performance of a washing machine wash cycle using a set of wash cycle parameters.

In the case of the front loading type, an introduction port through which the laundry is introduced is provided at the front side (or lateral side) of the cabinet and a drum shaft is horizontal or tilted a preset angle with respect to the ground. In the case of the top loading type, the introduction port through which the laundry is introduced is vertically provided on the top of the cabinet with respect to the ground.

Such the laundry treating apparatus has a plurality of preset courses and options that are configured to implement a wash cycle for removing foreign substances from clothes (hereinafter, laundry) and a dry cycle for removing moisture or water elements from the laundry. Accordingly, a user is able to designate a specific desired course or option out of the courses and options so as to perform washing or drying for the laundry

However, the user is likely not to feel satisfied with at least one of the washing, rinsing or drying performance in the specific course or options, even if selecting the specific course and option.

Even under the circumstances, there is no replaceable course or option such that the user cannot help selecting to perform the specific course and option.

Even when thinking that the washing, rinsing, spinning or drying performance is excessive or insufficient in the specific course or option, the user is able to correct the duration time of the specific course or option, the water level, the drum drive speed and the water temperature directly.

However, the user has to correct the above-noted conditions whenever tried to perform the specific course and option inconveniently.

In addition, the user has no professional knowledge that is needed to determine which conditions have to be changed, even unless satisfied with the specific course and option, and cannot improve the conditions disadvantageously.

### Disclosure of Invention

### Technical Problem

Accordingly, an object of the present invention is to address the above-noted and other problems and provide a laundry treating apparatus which may request a user's feedback once a certain course and option for performing a series of wash cycles configured to remove dirt or foreign substances from laundry and a series of dry cycles configured to remove moisture from the laundry, and store or transmit the feedback therein or to a server.

Another object of the present invention is to provide a laundry treating apparatus which may change the course and option based on the feedback after receiving and reflecting a feedback of the course and option.

Another object of the present invention is to provide a laundry treating apparatus which may receive the feedback for the course and option by requesting increase or decrease in the performances of the wash and dry cycles, and change a specific condition based on customized learning to drive a corresponding course and option to the request, and an online system.

Another object of the present invention is to provide a laundry treating apparatus which may re-correct the feedback for whether the user's requirements are reflected and improved based on the feedback for the course and option, and provide an optimized course and option.

Embodiments of the present disclosure may provide a control method of a laundry treating apparatus comprising: a controller that is configured to store a plurality of courses or options for performing one or more of a wash cycle configured to remove foreign substances from laundry and a dry cycle configured to remove moisture from the laundry; and an input part that is configured to input a command for implementing a specific one of the courses or options or a setting of the specific course or option; and a display that is configured to display whether to change the setting of the course or option, the control method comprising: a feedback requesting step for displaying one or more pieces of information that is used in changing the setting or whether to change the setting, when the wash cycle or the dry cycle is completed;a feedback inputting step for receiving an input of the change information from the input part; and a changing step for changing for changing the setting of the specific course or option stored in the controller based on the input of the change information.

### Solution to Problem

The technical problem underlying the present invention is solved by the features of the independent claims. The preferred embodiments are defined in the dependent claims. The laundry treating apparatus may include a laundry accommodating part that accommodates laundry and a drive part that is configured to rotate the laundry accommodating part, and the change information is provided to increase or decrease one or more of the repetition frequency, the total duration time, the drive part RPM and the drive part moving rate that are set in the course or option.

The laundry treating apparatus may further comprise a water supply valve that is configured to supply water to the laundry accommodating part, and the change information is provided to increase or decrease one or more of the opening time of the water supply valve and the water level inside the laundry accommodating part.

The change information may include washing change information that is provided to increase or decrease one or more of the repetition frequency, the total duration time, the drive RPM, the drive part moving rate, the opening time of the water supply valve and the water level inside the laundry accommodating part, which are related with the washing process of the specific course or option; rinsing change information that is provided to increase or decrease one or more of the repetition frequency, the total duration time, the drive part RPM, the drive part moving rate, the opening time of the water supply valve and the water level inside the laundry accommodating part, which are related with the rinsing process of the specific course or option; and hydrate-spinning information that is provided to increase or decrease one or more of the repetition frequency, the total duration time, the drive part RPM, the drive part moving rate, the opening time of the water supply valve and the water level inside the laundry accommodating part, which are related with the dehydrate-spinning process of the specific course or option.

The feedback requesting step displays one or more of the washing change information, the rinsing change information and the dehydrate-spinning information as respective icons on the display, and the feedback inputting step receives an input of each icon and input one or more of the washing change information, the rinsing change information and the dehydrate-spinning information, and the changing step changes the setting of the specific course or option corresponding to one or more of the washing change information, the rinsing change information and the dehydrate-spinning information based on the input of each icon.

The icons includes a washing performance increase/decrease icon that is configured to increase or decrease the washing performance during the washing process by changing the washing change information; a rinsing performance increase/ decrease icon that is configured to increase or decrease rinsing performance during the rinsing process by changing the rinsing change information; and a dehydrate-spinning performance increase/decrease icon that is configured to increase or decrease dehydrate-spinning performance during the dehydrate-spinning process by changing the dehydrate-spinning change information.

The changing step may increase or decrease one or more of the repetition frequency, the total duration time, the drive part RPM, the drive part moving rate, the opening time of the water supply valve and the water level inside the laundry accommodating part step by step, when at least one of the washing performance increase/decrease icon, the rinsing performance increase/decrease icon or the dehydrate-spinning performance increase/decrease icon is input.

The control method of the laundry treating apparatus may further include a previewing step for reflecting the changed setting of the specific course or option based on an input of the specific change information, when the feedback inputting step is performed.

The control method of the laundry treating apparatus may further include an approving step for receiving an input of a command that is configured to approve or deny the changed setting of the specific course or option from the input part.

The control method of the online system may further include a transmitting step for transmitting the change information to the server, when the change information is input in the inputting step; and a determining step for controlling the server to change the setting of the specific course or option based on the change information, wherein the receiving step receives the setting of the specific course and option transmitted from the server.

### Advantageous Effects of Invention

According to the present invention, the laundry treating apparatus has following effects.

First, the laundry treating apparatus is capable of requesting a user's feedback once a certain course and option for performing a series of wash cycles configured to remove dirt or foreign substances from laundry and a series of dry cycles configured to remove moisture from the laundry, and storing or transmitting the feedback therein or to a server.

In addition, the laundry treating apparatus is capable of changing the course and option based on the feedback after receiving and reflecting a feedback of the course and option.

In addition, the laundry treating apparatus is capable of receiving the feedback for the course and option by requesting increase or decrease in the performances of the wash and dry cycles, and changing a specific condition based on customized learning to drive a corresponding course and option to the request, and an online system.

In addition, the laundry treating apparatus is capable of re-correcting the feedback for whether the user's requirements are reflected and improved based on the feedback for the course and option, and providing an optimized course and option.

### Brief Description of Drawings

The present invention will become more fully understood from the detailed description given herein below and the accompanying drawings, which are given by illustration only, and thus are not limitative of the present invention, and wherein:
FIG. 1 is a diagram illustrating examples of a laundry treating apparatus according to the present disclosure;
FIG. 2 is a diagram illustrating an inner structure of the laundry treating apparatus;
FIG. 3 is a diagram illustrating an online system for the laundry treating apparatus;
FIG. 4 is a diagram illustrating a control panel that is configured to control the laundry treating apparatus;
FIG. 5 is a diagram illustrating one embodiment for receiving an input of the feedback by means of the control panel;
FIG. 6 is a diagram illustrating one embodiment for receiving an input of the feedback by means of an external terminal that is configured to control the laundry treating apparatus remotely;
FIG. 7 is a diagram illustrating a control method for the laundry treating apparatus; and
FIG. 8 is a diagram illustrating a control method for an online system including the laundry treating apparatus.

### Mode for the Invention

Referring to the accompanying drawings, exemplary embodiments of the present disclosure will be described in detail. Regardless of numeral references, the same or equivalent components may be provided with the same reference numbers and description thereof will not be repeated. If the terms disclosed in this specification conflict with general terms, the terms may be understood on the basis of their meanings as used in this specification. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. A singular representation may include a plural representation unless it represents a definitely different meaning from the context. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

A laundry treating apparatus may typically provide diverse courses and options according to a user's convenience. Such courses and options may include both a washing course that is used in a washer and a drying course that is used in a dryer.

Hereinafter, the present disclosure is described based on the courses that include the washing course that is applied to the washer and that is only to make the description easier. The course has to be understood to be a concept that includes a drying course used for a dryer as well.

The course is a series of drives configured of a wash cycle for removing foreign substances from clothes, a rinse cycle for separating the foreign substances from a washing detergent and a spin cycle for removing moisture from the clothes in the laundry treating apparatus. Also, the course may be an algorithm or control method that is preset to perform a start to the end of the washing. At this time, the course may also include dry cycle.

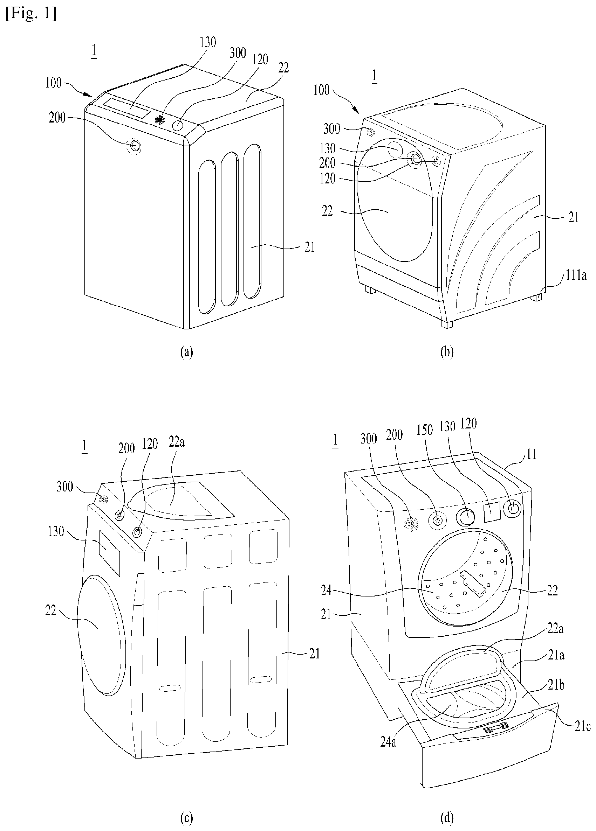

FIG. 1 illustrates various examples of the laundry treating apparatus according to the present disclosure.

The laundry treating apparatus 1 according to the present disclosure may include an opening for loading and unloading clothes (hereinafter, the laundry); a cabinet 21 that defines an exterior design; and a door 22 that is configured to open and close the opening.

Referring to FIG. 1 (a), the laundry treating apparatus 1 may be provided as a top load type including the opening 1 and the door 22 that are formed in a top of the cabinet 21.

Referring to FIG. 1 (b), the laundry treating apparatus according to the present disclosure may be provide as a front load type including the opening and the door 22 that are provide in a front of the cabinet 21.

Referring to FIG. 1 (c) or FIG. 1 (d), the laundry treating apparatus 1 may be configured of a front type and a top load type that are mounted vertically to perform washing and drying. As on example, the laundry treating apparatus 1 may include a front load type and a top load type that is mounted on the front load type (see FIG. 1(c)) or a front load type and a top load type that is mounted under the bottom of the front load type (see FIG. 1 (d)).

In case the laundry treating apparatus 1 is configured of such plural apparatuses that are multilayered, the apparatuses may share one cabinet 21 and the cabinet 21 may have a plurality of openings. Then, doors 22 and 22a may be provided to open and close the plurality of the openings.

In addition, the laundry treating apparatus may include a control panel 100 that is configured to receive, display or perform inputs of preset operation commands. Such operation commands may include a plurality of courses or options that are preset to perform a wash cycle configured to remove foreign substances or dirt from laundry or a dry cycle configured to remove moisture or water elements from the laundry.

A controller 100 may be installed in the control panel 100 to control all of the elements provided in the laundry treating apparatus so as to perform the a plurality of courses or options.

In the controller 110 may be stored the a plurality of courses or options for providing a series of control methods configured to perform at least one of the wash cycle for removing foreign substances from the laundry or the dry cycle for drying the laundry containing moisture.

When the laundry treating apparatus 1 is a washing machine, the predetermined course may include at least one or combination of a washing step configured to remove foreign substances from the laundry; a rinsing step configured to separate the foreign substances a washing detergent from the laundry; and a spinning step for removing moisture from the laundry. When the laundry treating apparatus 1 is a dryer, the predetermined option may be provided as a plurality of drying steps for removing moisture or water elements from the laundry.

Meanwhile, the predetermined options may include a series of control methods for changing additional conditions of the course when the course is performed.

In case the laundry treating apparatus 1 is provided as a washing machine, the predetermined options may be a series of control methods that are configured to adjust one or more of the duration and the drum rotation speeds (the drum RPMs) of the washing, rinsing and spinning steps, the rate of the drum rotation time (the moving rate) for a preset time period, the opening time of a water supply valve or the water amount (level), the electricity usage, the water temperature, presence of steam supply and the duration time of each step.

When the laundry treating apparatus 1is provided as the dryer, the predetermined options may be a series of control methods that are configured to adjust one or more of the drying step frequency, the drum RPM during the drying step, the rate of the drum rotation time (the moving rate) for a preset time period, the electricity usage, presence of steam supply and the duration time of the drying step.

Meanwhile, the control panel 100 may include a display 130 configured to display a state of the laundry treating apparatus 1; a power unit 120 configured to input a power to the laundry treating apparatus; and an input unit 150 configured to receive an input of a command for driving the laundry treating apparatus.

Meanwhile, the display 130 and the input part 150 are independently provided in the control panel 100. The display 130 may be provided as a display liquid crystal and the input part 150 may be provided as an additional button (see FIG. 1 (a), FIG. 1 (b) and FIG. 1 (c)). Alternatively, the control panel 100 may be provided as a touch display and the functions of the display 130 and the input part 150 may be realized on one screen (see FIG. 1 (b)).

In addition, the laundry treating apparatus 1 may further include a microphone 300 configured to recognize a user's voice; and a camera 200 configured to recognize the user's movement.

The camera 200 may be implemented to recognize the user's movement so as to implement the course or option. The microphone 300 may be implemented to recognize the user's voice to implement the course or option.

In addition, it may be recognized by using the microphone 300 and the camera 200 that a child or an infant comes into the cabinet 21 so as to notify the user or release the door locking. Accordingly, a safety accident may be prevented.

The laundry treating apparatus 100 may further include a speaker. Accordingly, the user may be notified of a state of laundry treating apparatus by a sound signal.

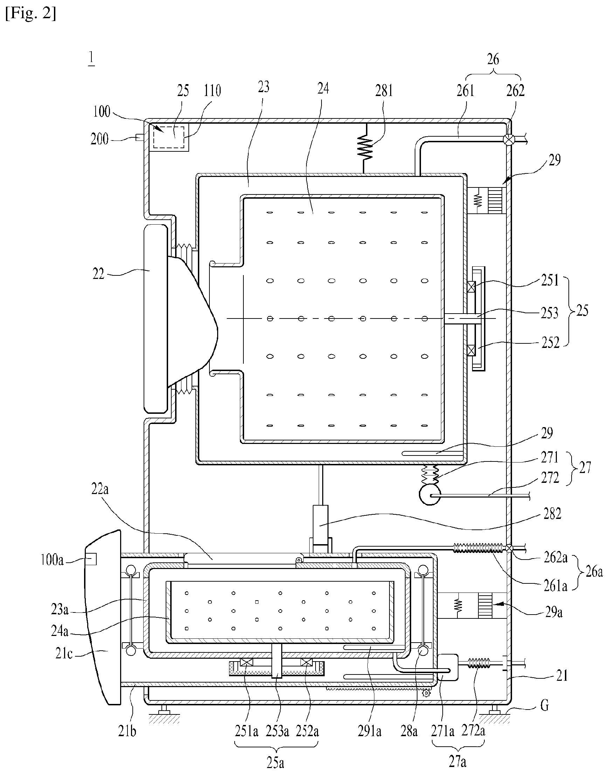

FIG. 2 illustrates an inner structure of the laundry treating apparatus according to one embodiment.

Specifically, FIG. 2 illustrates a specific structure of the laundry treating apparatus that is shown in FIG. 1 (d).

That is only for description. When the laundry treating apparatus is the front load type, the top load type or the dual type having the front load type and the top load type that are mounted in a multi-layered structure, only some elements of the basic structure shown in FIG. 2 may be used or only the installation position may be changed.

In other words, FIG. 2 illustrates the structure shown in FIG. 1 (d) as one example to avoid repeated description and any structures may be applicable only if capable of performing the functions of the laundry treating apparatus.

Referring to FIG. 2, the laundry treating apparatus 1 may include a cabinet 21 that defines an exterior design; and a laundry accommodation part provided in the cabinet to accommodate the laundry.

In case the laundry treating apparatus is provided as the washing machine, the laundry accommodation part may include a tub 23 provided in the cabinet 21 and configured to hold water; and a drum 24 rotatably mounted in the tub 23.

The laundry treating apparatus 1 may include a drive part 25 coupled to the tub 23 and configured to rotate the drum 24; a water supply part 26 configured to supply water to the tub 23; and a water discharge part 27 configured to discharge water from the tub 23.

Meanwhile, in case the laundry treating apparatus 1 is provided as the dryer, the laundry accommodation part may include only the drum 24 rotatably mounted in the cabinet 21.

Here, the laundry treating apparatus 1 may further include a hot air supply part or a heater 29 configured to supply hot air to the tub 23. In addition, it may include a door 22 provided to open and close the opening of the tub 23 and the opening of the cabinet 21.

The water supply part 26 may include a water supply valve 262 and a water supply pipe 261. The water discharge part may include a water discharge pump 271 and a water discharge pipe 272.

The drive part 25 may include a stator 251 coupled to the tub 23 and configured to generate a rotation magnetic field; a rotor 252 that is rotatable by the rotation magnetic field; and a shaft 253 that is rotatable together with the rotor 252 so rotate the drum 24.

The tub 23 may be supported to the cabinet 21 by a support portion 28 and vibration of the tub 23 may be damped by the support portion 28. The support portion 28 may include a damper 282 and a spring 281 that are configured to connect the cabinet 21 and the tub to damp the vibration.

Meanwhile, in case it is provided as the combined dual type, the laundry treating apparatus 1 may include a second tub 23a provided under or above the tub 23 and configured to hold water; a second drum 24a rotatably mounted in the second tub 23a; a second drive part 25a coupled to the second tub and configured to rotate the second drum 24a; a second water supply part 26a configured to supply water to the second tub 23a; and a second water discharge part 27a configured to discharge water from the second tub 23a.

When it is provided under the tub 23 as the top load type, the second the second tub 23a may be mounted in a drawer 21b that may freely enter and exit with respect to the cabinet 21.

The second water supply part 26a may include a second water supply valve 262a and a second water supply pipe 261a. The second water discharge part 27a may include a second water discharge pump 271a and a second water discharge pipe 272a.

The second drive part 25a may include a second stator 251a coupled to the second tub 23a and configured to generate a rotation magnetic field; a second rotor 252a that is rotatable by the rotation magnetic field; and a second shaft 253a that is rotatable together with the second rotor 252a to rotate the second drum 24a.

The second tub 23a may be supported to the cabinet 21 by a second support portion 28a and vibration of the tub 23 may be damped by the second support portion 28.

The controller 110 of the control panel 100 may be configured to control the second water supply unit 26a, the second water discharge part 27a and the second drive part 25a.

Specifically, the controller 110 may be configured to integrally control the laundry treating apparatus including the tub 23 and another laundry treating apparatus that is mounted on or under the tub 23 as the integrated controller.

As one example, the drive unit 25, 25a, the water supply unit 26, 26a, the water discharge unit 27, 27a and the hot air supply unit 29 may be configured to repeat drive and pause based on at least one of the courses and options that are preset in the control panel 100 or the controller 110 of the laundry treating apparatus.

As one example, the water supply valve 261, 261a may be opening based on the input course or option and the water discharge pup 261, 261a may be operated by rotating the drive unit 25, 25a. however, the control panel 100 may further include an auxiliary panel 100a additionally provided in the drawer 21b and configured to control the second water supply part 26a, the second water discharge part 27a and the second drive unit 25a respectively.

The auxiliary panel 100a may further include an additional controller independently provided from the controller 100 to independently control another laundry treating apparatus provided on or under the tub 23.

Meanwhile, the laundry treating apparatus 1 may further include a communication module 60 that is communicable with at least one of a server 10 or an external terminal 40 which will be described later.

When the laundry treating apparatus is provided as the combined type, the control panel 100 may be divided into a control panel configured to control the top laundry treating apparatus and a second control panel configured to control the bottom laundry treating apparatus. Alternatively, one control panel 100 may be provided to control the overall operation of the combined type laundry treating apparatus.

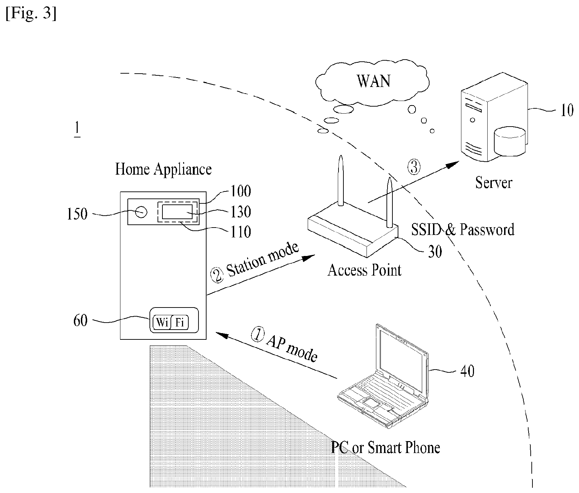

FIG. 3 illustrates an online system that is configured to control the laundry treating apparatus 1.

As shown in the drawing, a wireless internet communication module is applied to the laundry treating apparatus 1 to allow communication with a server 10 on an internet network via AP 30 (Access Point).

The laundry treating apparatus 1 may communicate with the server 10 to be remotely controlled by the external terminal 40 or update data. For that, the laundry treating apparatus 1 has to communicate with AP in the home first. Accordingly, the laundry treating apparatus 1 may further include a communication module 60 that is configured to directly communicate AP. As one example, the communication module may be a Wi-Fi module.

For the communication connecting of the laundry treating apparatus, the communication module 60 may be configured to support an enable mode that is communicable with a setting mode for the communication connecting.

The setting mode may be a mode for allow communication with AP. Accordingly, it may be referred to as AP mode. In addition, the enable mode may be a state where the laundry treating apparatus can communicate with the server via AP, in other words, a state where data can be transceived to perform the remote control server at any time. Specifically, it may be a standby state for the remote control service. Accordingly, the enable mode may be referred to as a connection mode or a standby mode.

In other words, an initial setting mode has to be performed to communication-connect the communication module 60. Once the communication is connected in the setting mode, the current mode may be always converted into the enable mode.

Input means for implementing the setting mode may be provided in the communication module 60. However, the communication module 60 may be embedded in the laundry treating apparatus 1 in many cases or mounted in the laundry treating apparatus as simple type. Accordingly, the input means may be the input part 150 of the laundry treating apparatus 1.

When communication-connected with the server 10 via AP 30, the communication module 60 may maintain a power-on state to consistently communicate with the server 10.

Meanwhile, considering a communication path from the laundry treating apparatus 1 to the server 10, a public internet network follows AP and AP follows a private internet network. The laundry treating apparatus 1 is granted a private IP and AP 30 may have a unique IP.

The server 10 may have IP and such IP may be a unique one. Accordingly, the unique IP of the server may be stored in the communication module 60 of the laundry treating apparatus (e.g., the Wi-Fi module) in advance. The communication module 60 of the laundry treating apparatus may be connected by the server IP through the activation process using the external terminal and mutual communication may be enabled.

In that process, AP 30 may transmit information about a port connected with the corresponding laundry treating apparatus and the unique IP. The server 10 may figure out the location of the laundry treating apparatus based on the information. Meanwhile, when the laundry treating apparatus 1 also transmits the unique device IP to the server, the server may figure out which and where laundry treating apparatus is located and have access to the laundry treating apparatus based on the information. In this instance, when a user ID and passwords are input, such information may be also transmitted to the server 10.

Accordingly, the server 10 may match a specific user' specific laundry treating apparatus 1 with the location. When the user sends a request for a specific service to the server via the external terminal 40, the server 10 may specify one laundry treating apparatus 1 and perform the service.

Meanwhile, the server 10 may connect the communication with the external terminal 40 by the unique IP and network. A remote communication module for connecting the communication with the server and an application (APP) may be selectively installed in the external terminal 40.

The external terminal 40 may be connected to the server 10 via the application by the remote communication module and control the laundry treating apparatus 1 remotely. The user may receive state information of the laundry treating apparatus 1 from the server 10 through the display panel provided as the touch panel and transmit an operation command of the laundry treating apparatus 1 to the server 10.

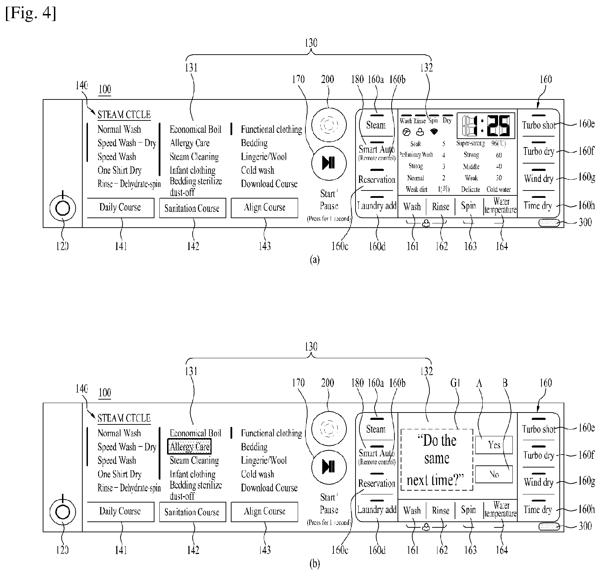

FIG. 4 illustrates one example of the control panel 100 that is provided in the laundry treating apparatus 1.

Referring to FIG. 4 (a), only the display 130 may be a display panel and the input part 150 may be a physical button that pressed additionally.

The input part 150 may include a course input unit configured to receive an input for selecting one of the a plurality of courses for performing a series of washing processes that are configured to include the wash cycle, the rinse cycle and the spin cycle; and an option select unit 160 configured to receive an input for selecting one of the predetermined options that are configured to adjust the strength and degree of the course.

As one example, when the laundry treating apparatus 1 is provided as the washing machine, the courses may include a first course that is configured of a normal washing method or combination of the washing methods for removing foreign substances from the laundry; a second course that is configured of a washing method or combination of the washing methods for sterilizing the laundry; and a third course that is configured of a washing method or combination of the washing methods for removing foreign substances in consideration of laundry fabric.

The options may include a first option configured to adjust a washing degree in the selected course; a second option configured to adjust the frequency of the rinsing; a third option configured to adjust a spinning degree; and a fourth option configured to determine the temperature of the water inside the tub holding the laundry and water. The adjusting of the washing strength and the spinning strength may mean the adjusting of the drum RPM and the period of the drum rotation direction variation in the wash cycle and the spin cycle.

The first course may be a normal course for washing clothes and referred to as 'Daily course'. The second course may be classified as a course that is strong in sterilizing and referred to as 'Sanitation course'. The third course may be a course that considers the laundry fabric and amount and referred to as 'Customized course'.

When the course select unit 140 is repeated selected, the courses sequentially set or displayed may be displayed and selected.

The course select unit 140 may include a first course configured to select one of the first courses; a second course select unit 142 configured to select one of the second courses; and a third course select unit 143 configured to select one of the third courses.

The option select unit 160 may be configured to select the courses that are sequentially set or displayed after being repeatedly input like the course select unit 140. In addition, the option select unit 160 may include a first option select unit 161 configured to adjust the washing strength in the selected course; a second option select unit 162 configured to adjust the ringing frequency; a third option select unit 163 configured to adjust the spinning strength; and a fourth option select unit 164 configured to determine the water temperature inside the tub holding water and laundry. The option select unit 160 may be provided to sequentially input the option select units and select a desired one.

The display 130 may be a display liquid crystal, a light that reflect light or a speaker that emits sound. The display 130 may include a first display unit 131 configured to display the course selected in the course input part; and a second display unit 132 configured to display the option selected in the option select part 160.

The first display unit 131 may be configured to display the selected course. As one example, an area corresponding to the selected course may flicker or the title of the course may be displayed on the display.

The second display unit 132 may be configured to display the selected option. As one example, an area corresponding to the selected option may flicker or the title of the option may be displayed on the display.

Specifically, the first display unit 131 may flicker a corresponding course when the course input part 140 is selected. It may display the corresponding course on the liquid crystal display or emit a sound, when the course input unit is selected. The first display unit 131 may be a display panel or a lamp configured to be luminescent near the content of the course.

Once the user clicks the daily course 141, the normal course may flick sequentially to notify the user of the corresponding course.

In addition, once the user clicks the satiation course, the corresponding course to the satiation course may sequentially flicker. Then, when the user clicks the customized course, the corresponding course to the customized course may sequentially flicker.

The second display unit 132 may be configured to flicker a corresponding option when the option selection part 160 is input. Or, it may be configured to display the corresponding option on the liquid crystal display or emit a predetermined sound when the option select part 160 is input. The second display unit 132 may be configured of a display panel or a lamp provided near the characters reading the option content.

The option select part 160 may sequentially flicker the first, second, third and fourth options by repeated clicking or touching. Accordingly, the user may select a desired option.

Meanwhile, the option select part 160 may further include a switch or a touch area that is configured to perform an additional function of the laundry treating apparatus 1 rather than the washing, the rinsing, the dehydrate-spinning and the water temperature.

The option select part 160 may further include a steam adjusting unit 160a configured to supply additional steam to the inside of the laundry treating apparatus 10; a reservation unit 160b configured to determine an operation time of the laundry treating apparatus; an auxiliary setting unit 160d configured to be clicked to add laundry during the operation of the laundry treating apparatus; a turbo unit 160e configured to add an option for forming strong water currents by accelerating the drum RPM; a turbo drying unit 160f configured to add an option for supplying strong hot air; a wind-drying unit 160g configured to add an option for supplying not the hot air but warm or cold air; and a time drying unit 160h configured to add an option for performing natural drying by rotating only the drum at a preset RPM.

The second display unit 132 may display specific details of the options selected for the course when the course or option is determined. In the other cases except inputting the course or option when the dry cycle or the wash cycle is performed or the reservation setting is performed or when the dry cycle or the wash cycle ends, the second display unit 132 may be configured of the display which may display information about a state of the laundry treating apparatus 1.

The above-noted structure is one of the examples. The control panel 100 may be configured of any display types only if including the input part 150 configured to receive the input of the command for driving the laundry treating apparatus 1 and the display part 130 configured to display a state of the laundry treating apparatus.

Referring to FIG. 4 (b), once performing a specific course and an specific option for performing one of the series of wash cycles for removing foreign substances from the laundry or the dry cycle for removing moisture from the laundry, the laundry treating apparatus may request the user's feedback on satisfaction with the course and option.

As one example, the laundry treating apparatus may request the user's direct feedback on the specific course and option or the user's indirect feedback by popping up a sentence G1 such as "Would you do the same next time?" from the display unit 130.

The display part 130 may include a feedback approve button A and a feedback approve deny button B that may be configured to receive an input for determining whether the user performs the feedback.

Accordingly, when the user inputs the feedback approve button A, a list that is related with which feedback on the course or option is requested may be displayed on the display 130. When the feedback approve deny button B is input or a preset standby time period passes, the course and option may finally end and the power of the laundry treating apparatus may be turned off.

In this instance, the feedback approve button A and the feedback approve deny button B may be replaced by one of the input part 130.

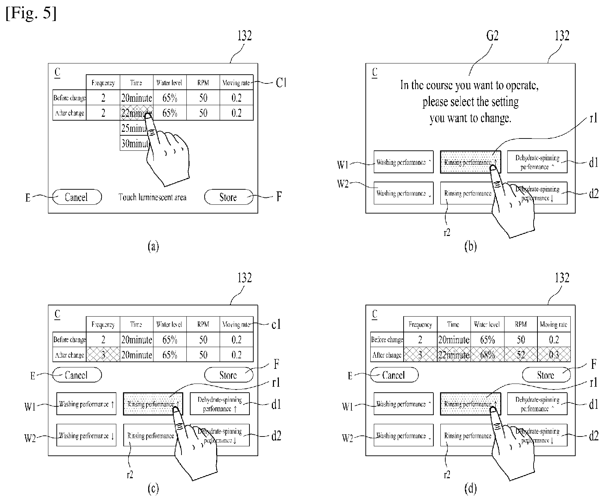

FIG. 5 illustrates one embodiment for inputting the feedback via the control panel 100.

The course or option may include diverse settings for performing the wash cycle and dry cycle. As one example, the settings may include the total rotation time of the drive part, the drive unit RPM, the moving rate of the drive part, the open time of the water supply valve or the water level inside the tub during the course or option.

For that, change information for changing the settings directly or indirectly may be displayed on the display 130. The change information may be provided as a button or an icon that is configured to change one or more of the repetition frequency and the total duration times of the course or option performance, the drive part RPM, the drive part moving rate, the opening time of the water supply valve and the water level inside the tub.

Referring to FIG. 5 (a), change information C is displayed on the display 130 once the course or option ends. Also, once the feedback request displayed on the display 130 approves, the change information C may be displayed on the display 130.

The change information C may be configured to change one or more of the total duration time, the drive part RPM, the drive part moving rate, the opening time of the water supply valve and the water level inside the tub out of the course or option settings.

The change information C may be displayed as Table C1 that is configured to change a current setting state of the course or option.

The user may directly input a desired setting to Table C1 and change the setting. In addition, a preset value may be displayed on Table C1 to change the settings gradually.

As one example, when a setting part that is related with the duration time is input to Table C1, preset settings that are related with the duration time and changes the duration time gradually may be displayed on Table C1. The user may select a desired duration time from the settings. When the duration time of the course or option is 20 minutes, setting values such as 15 minutes, 25 minutes and 30 minutes may be displayed and, the user may select one of them change the setting related with the duration time.

In addition, the change information C may be provided to change the overall settings of the course or option. However, the change information C may change only the settings of some processes provided in the specific course or option. As on example, when the specific course or option includes the wash cycle, the rinse cycle and the spin cycle that are continuously provided, the change information may change only predetermined processes of the cycles. Accordingly, the user's intention to change only some processes of the specific course or option clearly.

As one example, when the laundry treating apparatus 1 is provided as the washing machine, the change information may include one or more of the washing change information w that is configured to increase or decrease at least one of the repetition frequency, the total duration time, the drive part RPM, the drive part moving rate, the water supply valve opening time or the laundry accommodation part water level, which is related with the wash cycle of the specific course or option, and rinsing change information r that is configured to increase or decrease at least one of the repetition frequency, the total duration time, the drive part RPM, the drive part moving rate, the water supply valve opening time or the laundry accommodation part water level, which is related with the rinse cycle of the specific course or option.

The change information may further include dehydrate-spinning change information d that is configured to increase or decrease at least one of the repetition frequency, the total duration time, the drive part RPM, the drive part moving rate, the water supply valve opening time or the laundry accommodation part water level, which is related with the spin cycle of the specific course or option.

The display part 130 may display the predetermined settings and the changed settings to compare them with each other on the change window c1. In other words, to allow the user to check the changed settings before the controller confirm in advance, the change window c1 may be displayed together with the changed setting.

In addition, the display 130 may display a storage button F for approving to change the setting of the course or option into the changed setting; and a cancel button E.

When the storage button F is selected and input, the setting of the course or option may be changed and stored in the controller 110 or server 10. Accordingly, the changed setting may be reflected and applied when the next course or option is performed. When the cancel button E is selected and input, the changed setting may be canceled. When the cancel button E is additionally input, the process for reflecting the feedback may be completed.

Meanwhile, the user is not likely to figure out which setting to change clearly. As one example, when desired to enhance the rising performance, the user is not able to figure out which setting to increase or decrease clearly and whether to change only one setting or two or more. In addition, when the user changes the setting freely too much, the functions of the laundry treating apparatus may not be performed properly and also the laundry fabric is likely to damage.

Accordingly, the laundry treating apparatus 1 and the online system including the same may receive only the feedback for the function of the course or option from the user and automatically change the setting based on the feedback so as to solve the problem.

Referring to FIG. 5 (b), the display 130 displays the change information c as icon.

Specifically, when the change information c includes the washing change information w, the rinsing change information r and the dehydrate-spinning change information d, the washing change information w are displayed as washing increase/ decrease icons w1 and w2 and the rinsing change information r are displayed as rinsing increase/decrease icons r1 and r2, and also the dehydrate-spinning change information d are displayed as dehydrate-spinning increase/decrease icons d1 and d2. Corresponding setting may be stored in the controller 110 or the server 10 to be changed when the icons are input.

As one example, the washing enhance icons include a washing increase icon w1 for increasing the washing performance; and a washing decrease icon w2 for decreasing the washing performance. The rinsing increase/decrease icons include a rinsing increase icon r1 for increasing the rinsing performance; and a rinsing decrease icon w2 for decreasing the rinsing performance. The dehydrate-spinning increase/ decrease icons include a dehydrate-spinning increase icon d1 for increasing the dehydrate-spinning performance; and a dehydrate-spinning decrease icon d2 for decreasing the dehydrate-spinning performance.

Accordingly, the user may request a setting change of the course or option only by inputting the icons. The controller 110 or the server 10 may change the course or options to have the settings optimized to the user's change request. Also, even unless the user has a sufficient knowledge about the laundry treating apparatus 1 or connects of the settings provided in the course or option, the user may intuitively perform the desired feedback only by inputting the iconized change information .

Meanwhile, the guide words G2 may be displayed on the display 130 to induce the input the iconized change information c so as to allow the user to make a desired feedback.

FIGS. 5 (b) and 5 (c) illustrate one embodiment that the user inputs the rinsing increase icon r.

Once the rinsing increase icon r1 is input, the display 130 may display the setting for enhancing the rinsing performance.

Specifically, the display 130 may display the existing settings of the course or options and the change settings that are changed by the input of the rinsing increase icon r1. Specifically, the user may recognize which setting is changed to enhance the rinsing performance.

Referring to FIG. 5 (c), once the rinsing increase icon r1 is input, all of the settings may be increased. Referring to FIG. 5 (d), once the rinsing increase icon r1 is input, from the one of the settings that affects the rinsing performance most to the one that affects the rinsing performance least may be sequentially changed or some of the settings may be simultaneously changed step by step.

As one example, the rinsing frequency of the course or option may be increased first whenever the rinsing increase icon r1 is input. Hence, the rinsing time and the rinsing water level may be increased, and the drive part RPM and the drive part moving rate of the rinse cycle may be increased last.

The order and degree of the change may be pre-stored in the controller 110 or the server 10.

In contrast, when the rinsing decrease icon r2 is input, the setting value may be increased. Also, the washing increase/decrease icon w and the hydrate-spinning increase/decrease d may be the same. However, the washing performance and the hydrate-spinning performance may be affected more by the frequency, RPM and the moving rate. Accordingly, once the icon w or d is input, the frequency, RPM and the moving rate may be changed first, and the water level or the duration time may be then changed.

As mentioned above, the user may change the setting of the course or option as much as desired only by selecting the increase/decrease in the function of the course or option. In other words, the feedback on the settings that affects the washing performance, the rinsing performance and the hydrate-spinning performance of the course or option may be input based on the input of the corresponding icon and the input feedback may be reflected.

Here, the input of the change information or the input of the icons may be replaced by one button that is provided in the input part 130.

Meanwhile, the setting value changed based on the change information may be predetermined by the controller 100 or the server 10. In other words, the server 10 or the controller 100 may determine a value that has to be changed to be proper to the laundry treating apparatus 1.

As one example, when the change information is input one time, variation of the change setting may be may be stored in the server 10 or the controller 100 in advance.

For that, the server 10 may collect big data for at least one of the figures of which the settings the users change or the figures of which the settings are studied by manufacturers. Accordingly, the server 10 or the controller 100 may perform deep learning or machine learning on the big data and then determine the variation of the setting change based on the result of the learning.

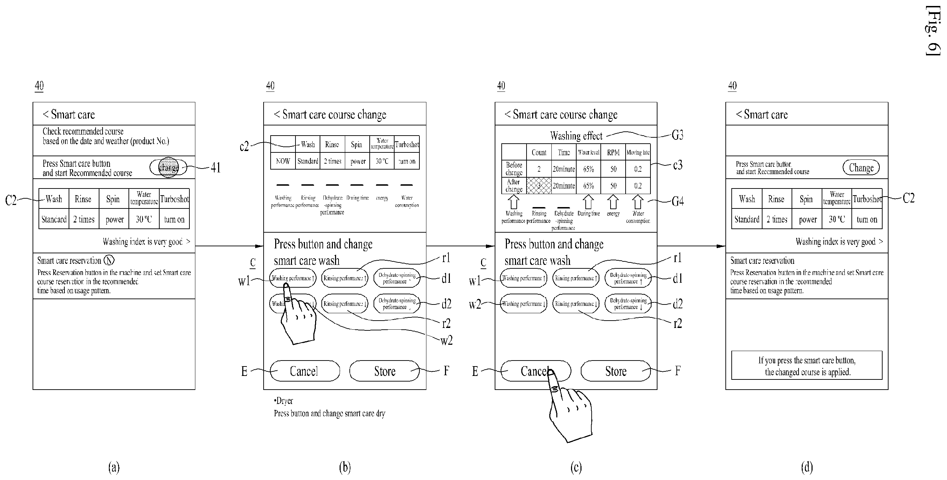

FIG. 6 illustrates one embodiment that the feedback on the course or option settings may be transmitted by means of an external terminal 40 configured to control the laundry treating apparatus 1.

When the course or option performed in the laundry treating apparatus is completed, the laundry treating apparatus may transmit information on the completion of the course or option to the server via the communication module 60.

The server 10 may receive the information and transmit information for receiving a feedback to the external terminal.

Referring to FIG. 6 (a), the external terminal 40 may receive and the content of the settings for the course or option performed in the laundry treating apparatus 1, and display the content and the change button 41 for requesting the feedback simultaneously.

When the change button 14 is selected, the server 10 or the external terminal 40 may recognize that the user wants the feedback.

An entire setting table c2 on the course or option may be displayed on the external terminal 40. On the setting table c2 may be the frequency or strength of the washing, rinsing and hydrate-spinning may be functionally displayed. The other additional function (e.g., a water level, a turbo shot and other special functions) may be also displayed.

Referring to FIG. 6 (b), when the change button 41 is selected, the display of the external terminal 40 may display the setting table c2 for inform the function of the current course or option and the change information c for changing the setting.

The change information c may be displayed as diverse icons that indicate the contents for strengthen or weaken the functions of the course or option. When the laundry treating apparatus is provided as the washing machine, the icons may include the washing increase/decrease icon w that is related with the washing performance of the course or option, the rinsing increase/decrease icon r related with the rinsing performance; and the dehydrate-spinning icon d that is related with the dehydrating performance. The user may input the washing increase icon w1. In this instance, the setting for the washing may be displayed on the setting table.

Referring to FIG. 6 (c), the display of the external terminal may display the setting for the washing performance of the course or option. Here, function words (G3) may be displayed to indicate that the setting is related with the washing performance. Examples of the function words G3 may include "Wash Performance".

In addition, a specific setting table c3 related with the washing performance may be displayed together. On the setting table c3 may be displayed not only the basic setting but also a setting that will be changed based on the input of the washing increase icon w1.

Rather than the setting table c3, a diagram d4 may be displayed to show which function is changed based on the input of the washing increase icon w1.

When the washing increase icon w1 is input, the repetition frequency, the drum RPM, the moving rate, the water level and the washing duration time of the washing step performed in the course or option may be sequentially or changed or at least one of them may be simultaneously changed step by step.

The variation of the changed setting may be preset in the server 10. Accordingly, the user may change the setting of the course or option as much as wants only by selecting the increase/decrease in the functions of the course or option.

Meanwhile, the setting changed on the setting table c2 may be pre-shown, not the setting reflected in the laundry treating apparatus 1. Accordingly, the user needs to input a command for storing the changed setting to change the current setting to the changed setting of the course or option. For that, the display of the external terminal 40 may additionally display the store button F configured to store the changed content and the cancel button E for canceling the changed content.

Referring to FIG. 6 (d), when the user inputs the store button F after inputting the respective change information C, the external terminal 40 may display the changed setting of the course or option. Also, it may display the changed setting table c2 based on the changed setting. The server 10 may then store the changed setting and transmit it to the controller to change the setting of the course or option permanently. Accordingly, the user may use the changed setting for the course or option.

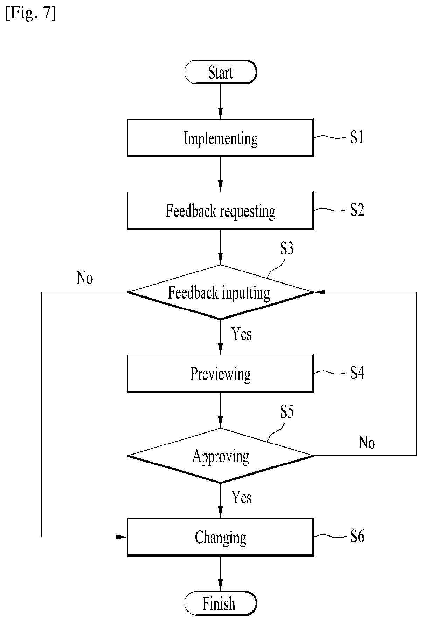

FIG. 7 illustrates one embodiment of a control method of the laundry treating apparatus 1.

The controller 110 of the laundry treating apparatus 10 may include an implementing step s1 for implementing the course or option based on the input of the operation part 170 after determining a specific one of the courses or options configured to perform at least one of the wash cycle for removing foreign substances or the dry cycle for removing moisture from the laundry based on the user's input of the input part 130.

Once the implementing step s1 ends, the controller 110 may perform a feedback requesting step s2 for requesting the user from a replay for whether to change the setting of the specific course or option or displaying at least one or more pieces of the information on the setting change on the display 130.

The user may ignore the feedback requesting step s2 or input the additional input part 130 to input a command for not making the feedback. However, when desired to change the setting of the course or option after checking the state of the laundry, the user may replay the feedback by inputting of the input part 130.

When the user inputs the input for making the feedback via the input part 130, the controller 110 may perform a feedback inputting step s3 for receiving specific change information for changing a specific setting of the specific course or option.

Unless the user inputs no replay for the feedback or if a preset time period passes, the controller may end the operation of the laundry treating apparatus.

The change information may be the contents for directly changing the setting of the course or option or for changing some function of the course or option. When the input of the specific change information is recognized, the controller 110 may and perform a previewing step s4 for displaying the reflected result of the setting after reflecting the changed setting of the course or option corresponding to the input of the change information in advance.

Until the previewing step s4 is completed, the feedback inputting step s3 may be repeated and continued. Accordingly, the user may continuously check in the previewing step s4 that the setting of the course or option is changed by inputting the change information in the feedback inputting step s3. Accordingly, the controller 110 may receive the input of the user's desired feedback.

In the previewing step s4, the display may display the buttons for storing or canceling the change of the course or option, together with the changed setting of the course or option.

The controller 110 may perform an approving step s5 for receiving an input of a command for approving or denying the changed setting of the specific course or option from the input part. When the user inputs the input part 130 or the store button A displayed on the display 130, the controller 110 perform a changing step s7 for changing the setting of the course or option.

Meanwhile, when the input part is input or the cancel button B displayed on the display 30 is input, the controller 100 may end the operation of the laundry treating apparatus 1.

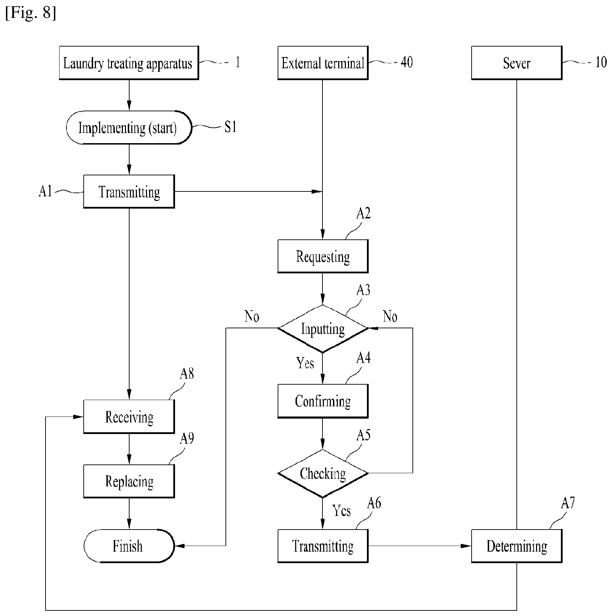

FIG. 8 illustrates a control method of an online system including the laundry treating apparatus 1.

The laundry treating apparatus may complete an implementing step S1 for implementing the wash or dry cycle. Once the implementing step s1 is completed, the laundry treating apparatus 1 may perform a transmitting step A1 for transmitting the setting of the performed specific course or option to the server 10 or the controller 110 by means of the communication module 60.

Once receiving information about the setting, the server 10 may perform a requesting step A2 for displaying the change information C configured to change the setting of the course or option on the display panel after communicating with the external terminal 40.

The requesting step S2 may be the step for requesting the user's feedback on the course or option substantially. A popup window for asking the user whether to confirm the setting of the course or option and change the setting may be displayed on the external terminal 40 as a push alarm. Here, only when the user implements a specific application in the external terminal 40, the content for asking whether to confirm the setting and change the setting may be displayed.

When the requesting step S2 is performed, the button for asking the user whether to perform the feedback or cancel the feedback may be displayed on the external terminal 40 together. The button for asking whether to make the feedback may be a change button for changing the setting of the course or option.

Once the change button is input, an input step A3 for receiving an input of specific change information for changing specific setting of the course or option may be performed. The change information may be the content indicating that the setting of the course or option is directly changed or the content indicating that the function of the course or option is changed.

When the input step A3 is performed, on the display panel may be performed a confirming step A4 for reflecting the changed setting of the course or option corresponding to the input of the change information in advance and displaying it after that.

The inputting step A3 and the confirming step A4 may be repeated and continued until the confirming step A4 is completed. In the confirming step A4, buttons for storing or cancel the change of the course or option may be also displayed, together with the changed setting of the course or option.

The external terminal 40 may perform a confirming step A4 for receiving a command of approving the changed setting of the specific course or option based on the input of the change information.

When the button for approving the changed setting is input in the checking step A5, the external terminal 40 may perform a transmitting step A4 for transmitting such information to the server 10. The external terminal 40 may directly transmit the changed setting of the course or option to the server or only specific information for changing the course or option to the server 10.

The server 10 may perform a determining step A7 for finally determining and change the setting of the course or option based on the specific change information.

Hence, the laundry treating apparatus 1 may perform a receiving step A8 for receiving the changed setting of the course or option via the communication module 60.

After that, the laundry treating apparatus 1 may perform a replacing step A9 for replacing the stored setting of the specific course or option into the received setting of the specific course or option via the communication module.

Meanwhile, when the button for denying the feedback is input in the checking step A5, the requesting step A2 for requesting the user's feedback may be performed again. At this time, when the user standbys for a preset time period or inputs the button for denying the feedback, the externa terminal 40 may transmit information that the feedback process ends to the server 10.

As the present features may be embodied in several forms without departing from the scope of the appended claims, it should also be understood that the above-described embodiments are not limited by any of the details of the foregoing description, unless otherwise specified, but rather should be considered broadly within its scope as defined in the appended claims.

## Claims

1. A control method of a laundry treating apparatus including:
a controller (110) configured to store a plurality of courses or options for performing one or more of a wash cycle for removing foreign substances from laundry, a rinse cycle for separating the foreign substances from a washing detergent, a spin cycle for removing moisture from the laundry, and a dry cycle to remove moisture from the laundry;
an input part (150) configured to receive a command for implementing a specific one of the plurality of courses or options or for changing a setting of the specific course or option; and
a display (130) configured to display the setting or whether to change the setting of the course or option, the control method comprising:
an implementing step (S1) implementing the specific course or option;
a feedback requesting step (S2) for displaying, once the implementing step (S1) ends, one or more change information (C) based on that the wash cycle, the rinse cycle, the spin cycle or the dry cycle is completed;
a feedback inputting step (S3) receiving an input of the change information (C) from the input part; and
a changing step (S6) changing the setting of the specific course or option stored in the controller (110) based on the input of the change information,
wherein the change information (C) includes one or more of washing change information (w), rinsing change information (r), and dehydrate-spinning change information (d), the washing change information (w) is displayed by the display (130) as washing increase/ decrease icons (w1, w2) including a washing increase icon (w1) for increasing the washing performance and a washing decrease icon (w2) for decreasing the washing performance, the rinsing change information (r) is displayed by the display (130) as rinsing increase/decrease icons (r1, r2) including a rinsing increase icon (r1) for increasing the rinsing performance and a rinsing decrease icon (r2) for decreasing the rinsing performance, and the dehydrate-spinning change formation (d) is displayed by the display (130) as dehydrate-spinning increase/decrease icons (dl, d2) including a dehydrate-spinning increase icon (d1) for increasing the dehydrate-spinning performance and a dehydrate-spinning decrease icon (d2) for decreasing the dehydrate-spinning performance.

2. The control method of claim 1, wherein the laundry treating apparatus comprises:
a laundry accommodating part (24) for accommodating laundry, and
a drive part (25) configured to rotate the laundry accommodating part (24), and
wherein change information (C) is provided to increase or decrease one or more of the repetition frequency, the total duration time, the drive part RPM, and the drive part moving rate that are set in the course or option.

3. The control method of claim 2, wherein the laundry treating apparatus further comprises: a water supply valve (262) configured to supply water to the laundry accommodating part (24), and
the change information (C) is provided to increase or decrease one or more of the opening time of the water supply valve (262) and the water level inside the laundry accommodating part (24).

4. The control method of claim 3, wherein:
the washing change information (w) is provided to increase or decrease one or more of the repetition frequency, the total duration time, the drive RPM, the drive part moving rate, the opening time of the water supply valve (262), and the water level inside the laundry accommodating part (24);
the rinsing change information (r) is provided to increase or decrease one or more of the repetition frequency, the total duration time, the drive part RPM, the drive part moving rate, the opening time of the water supply valve (262), and the water level inside the laundry accommodating part (24); and
the dehydrate-spinning information (d) is provided to increase or decrease one or more of the repetition frequency, the total duration time, the drive part RPM, the drive part moving rate, the opening time of the water supply valve (262), and the water level inside the laundry accommodating part (24).

5. The control method of claim 4, wherein the feedback requesting step (S2) displays one or more of the washing change information (w), the rinsing change information (r), and the dehydrate-spinning information (d) as respective icons (w1, w2, r1, r2, d1, d2) on the display (130), and
the feedback inputting step (S3) receives an input for each displayed icon (w1, w2, r1, r2, d1, d2) corresponding to one or more the washing change information (w), the rinsing change information (r), and the dehydrate-spinning information (d), and
the changing step (S6) changes the setting of the specific course or option corresponding to the one or more washing change information (w), rinsing change information (r), and dehydrate-spinning information (d) based on the input of each displayed icon (w1, w2, r1, r2, d1, d2).

6. The control method of claim 5, wherein:
the washing increase/decrease icons (w1, w2) are configured to increase or decrease the washing performance during a washing process by changing the washing change information (w);
the rinsing increase/decrease icons (r1, r2) are configured to increase or decrease the rinsing performance during a rinsing process by changing the rinsing change information; and
the dehydrate-spinning increase/decrease icons (d1, d2) are configured to increase or decrease the dehydrate-spinning performance during a dehydrate-spinning process by changing the dehydrate-spinning change information.

7. The control method of claim 6, wherein the changing step (S6) increases or decreases one or more of the repetition frequency, the total duration time, the drive part RPM, the drive part moving rate, the opening time of the water supply valve (262), and the water level inside the laundry accommodating part (24) step by step, when at least one of the washing increase/decrease icons (w1, w2), the rinsing increase/decrease icons (r1, r2), or the dehydrate-spinning increase/decrease icons (d1, d2) is input.

8. The control method of claim 1, further comprising a previewing step (S4) for reflecting the changed setting of the specific course or option based on an input of the specific change information, when the feedback inputting step (S3) is performed.

9. The control method of claim 8, further comprising an approving step (S5) for receiving an input of a command to approve or deny the changed setting of the specific course or option from the input part (S150).

10. A control method of an online system including a server (10) and a laundry treating apparatus (1) comprising a communication module (60) configured to communicate with the server (10), wherein a plurality of courses or options for performing one or more of a wash cycle for removing foreign substances from laundry, a rinse cycle for separating the foreign substances from a washing detergent, a spin cycle for removing moisture from the laundry, and a dry cycle to remove moisture from the laundry are stored; an external terminal (40) configured to remotely control the laundry treating apparatus (1) by communicating with the server (10) and including a display panel for displaying information to a user or receiving an input of a command, the control method comprising:
a transmitting step (A1) performed, once an implementing step (S1) implementing a specific course or option is completed, via the communication module (60), to transmit a setting of the specific course or option of the plurality of courses or options, wherein the setting is based on that the wash cycle or the dry cycle is completed in the laundry treating apparatus;
a requesting step (A2) displaying change information (C), that is provided to change the setting of the specific course or option, on a display panel of the external terminal (40), when the setting is received;
an inputting step (A3) receiving an input of the change information (C) via the display panel;
a receiving step (A8) receiving the specific course or option having the changed setting based on the change information (C) via the communication module (60); and
a replacing step (A9) replacing the setting of the specific course or option stored in the laundry treating apparatus with the received setting of the specific course or option from the communication module (60),
wherein the change information (C) includes one or more of washing change information (w), rinsing change information (r), and dehydrate-spinning change information (d), the washing change information (w) is displayed by the display (130) as washing increase/ decrease icons (w1, w2) including a washing increase icon (w1) for increasing the washing performance and a washing decrease icon (w2) for decreasing the washing performance, the rinsing change information (r) is displayed by the display (130) as rinsing increase/decrease icons (r1, r2) including a rinsing increase icon (r1) for increasing the rinsing performance and a rinsing decrease icon (r2) for decreasing the rinsing performance, and the dehydrate-spinning change formation (d) is displayed by the display (130) as dehydrate-spinning increase/decrease icons (dl, d2) including a dehydrate-spinning increase icon (d1) for increasing the dehydrate-spinning performance and a dehydrate-spinning decrease icon (d2) for decreasing the dehydrate-spinning performance.

11. The control method of claim 10, further comprising:
a second transmitting step (A6) for transmitting the change information (C) to the server (10), when the change information (C) is input in the inputting step (A3); and
a determining step (A7) for controlling by the server (10) to change the setting of the specific course or option based on the change information,
wherein the receiving step (A8) receives the setting of the specific course and option transmitted from the server (10).

12. The control method of claim 10, further comprising a checking step (A5) for displaying the setting of the specific course or option that is changed based on the input of the specific change information in the inputting step (A3).

13. The control method of claim 12, further comprising a checking step (A5) for receiving an input of a command for approving or denying the changed setting of the specific course or option via the display panel.

14. The control method of claim 10, wherein the laundry treating apparatus comprises a laundry accommodating part (24) for accommodating laundry; and a drive part (25) for rotating the laundry accommodating part, wherein the change information (C) increases or decreases one or more of the repetition frequency, the total duration time, the drive part RPM, and the drive part moving rate, which are set in the course or option.

15. The control method of the online system of claim 11, wherein the laundry treating apparatus further comprises a water supply valve (262) configured to supply water to the laundry accommodating part (24),
wherein:
the washing change information (w) is provided to increase or decrease one or more of the repetition frequency, the total duration time, the drive RPM, the drive part moving rate, the opening time of the water supply valve (262), and the water level inside the laundry accommodating part (24);
the rinsing change information (r) is provided to increase or decrease one or more of the repetition frequency, the total duration time, the drive part RPM, the drive part moving rate, the opening time of the water supply valve (262), and the water level inside the laundry accommodating part (24); and
the dehydrate-spinning information (d) is provided to increase or decrease one or more of the repetition frequency, the total duration time, the drive part RPM, the drive part moving rate, the opening time of the water supply valve (262), and the water level inside the laundry accommodating part (24), and
wherein the requesting step (A2) displays one or more of the washing change information (w), the rinsing change information (r), and the dehydrate-spinning information (d) as respective icons (w1, w2, r1, r2, d1, d2) on the display (130), and
the inputting step (A3) receives an input for each displayed icon (w1, w2, r1, r2, d1, d2) corresponding to one or more of the washing change information (w), the rinsing change information (r), and the dehydrate-spinning information (d), and
the determining step (A7) changes the setting of the specific course or option corresponding to one or more of the washing change information (w), the rinsing change information (r), and the dehydrate-spinning information (d) based on the input of each displayed icon (w1, w2, r1, r2, d1, d2).

## Patentansprüche

1. Steuerverfahren einer Wäschebehandlungsvorrichtung, die Folgendes enthält:
eine Steuereinheit (110), die konfiguriert ist, mehrere Programme oder Wahlmöglichkeiten zum Durchführen eines Waschzyklus zum Entfernen von Fremdstoffen von Wäsche und/oder eines Spülzyklus zum Trennen der Fremdstoffe von einem Waschmittel und/oder eines Schleuderzyklus zum Entfernen von Feuchtigkeit aus der Wäsche und/oder eines Trocknungszyklus zum Entfernen von Feuchtigkeit aus der Wäsche zu speichern;
eine Eingabekomponente (150), die konfiguriert ist, einen Befehl zum Implementieren eines bzw. einer bestimmten der mehreren Programme oder Wahlmöglichkeiten oder zum Ändern einer Einstellung des bestimmten Programms oder der bestimmten Wahlmöglichkeit zu empfangen; und
eine Anzeigeeinrichtung (130), die konfiguriert ist, die Einstellung oder ob die Einstellung des Programms oder der Wahlmöglichkeit geändert werden soll, anzuzeigen, wobei das Steuerverfahren Folgendes umfasst:
einen Implementierungsschritt (S1), der das bestimmte Programm oder die bestimmte Wahlmöglichkeit implementiert;
einen Rückmeldungsanforderungsschritt (S2) zum Anzeigen einer oder mehrerer Änderungsinformationen (C), sobald der Implementierungsschritt (S1) endet, darauf beruhend, dass der Waschzyklus, der Spülzyklus, der Schleuderzyklus oder der Trocknungszyklus abgeschlossen ist;
einen Rückmeldungseingabeschritt (S3), der eine Eingabe der Änderungsinformationen (C) von der Eingabekomponente empfängt; und
einen Änderungsschritt (S6), der die Einstellung des bestimmten Programms oder der bestimmten Wahlmöglichkeit, die in der Steuereinheit (110) gespeichert ist, auf der Grundlage der Eingabe der Änderungsinformationen ändert,
wobei die Änderungsinformationen (C) Waschänderungsinformationen (w) und/oder Spüländerungsinformationen (r) und/oder Wasserentzugs-Schleuder-Änderungsinformationen (d) enthalten, wobei die Waschänderungsinformationen (w) durch die Anzeigeeinrichtung (130) als Wasch-Erhöhungs/Verringerungs-Symbole (w1, w2) angezeigt werden, die ein Wascherhöhungssymbol (w1) zum Erhöhen der Waschleistung und ein Waschverringerungssymbol (w2) zum Verringern der Waschleistung enthalten, die Spüländerungsinformationen (r) durch die Anzeigeeinrichtung (130) als Spül-Erhöhungs/Verringerungs-Symbole (r1, r2) angezeigt werden, die ein Spülerhöhungssymbol (r1) zum Erhöhen der Spülleistung und ein Spülverringerungssymbol (r2) zum Verringern der Spülleistung enthalten, und die Wasserentzugs-Schleuder-Änderungsinformationen (d) durch die Anzeigeeinrichtung (130) als Wasserentzugs-Schleuder-Erhöhungs/Verringerungs-Symbole (d1, d2) angezeigt werden, die ein Wasserentzugs-Schleuder-Erhöhungssymbol (d1) zum Erhöhen der Wasserentzugs-Schleuder-Leistung und ein Wasserentzugs-Schleuder-Verringerungssymbol (d2) zum Verringern der Wasserentzugs-Schleuder-Leistung enthalten.

2. Steuerverfahren nach Anspruch 1, wobei die Wäschebehandlungsvorrichtung Folgendes umfasst:
eine Wäscheaufnahmekomponente (24) zum Aufnehmen von Wäsche; und
eine Antriebskomponente (25), die konfiguriert ist, die Wäscheaufnahmekomponente (24) zu drehen,
wobei Änderungsinformationen (C) bereitgestellt werden, um die Wiederholungshäufigkeit und/oder die Gesamtlaufzeit und/oder die RPM [min⁻¹] der Antriebskomponente und/oder die Bewegungsgeschwindigkeit der Antriebskomponente, die im Programm oder in der Wahlmöglichkeit eingestellt sind, zu erhöhen oder zu verringern.

3. Steuerverfahren nach Anspruch 2, wobei die Wäschebehandlungsvorrichtung ferner Folgendes umfasst:
ein Wasserzuführventil (262), das konfiguriert ist, der Wäscheaufnahmekomponente (24) Wasser zuzuführen, und
wobei die Änderungsinformationen (C) bereitgestellt werden, um die Öffnungszeit des Wasserzuführventils (262) und/oder den Wasserpegel im Inneren der Wäscheaufnahmekomponente (24) zu erhöhen oder zu verringern.

4. Steuerverfahren nach Anspruch 3, wobei:
die Waschänderungsinformationen (w) bereitgestellt werden, um die Wiederholungshäufigkeit und/oder die Gesamtlaufzeit und/oder die RPM [min⁻¹] des Antriebs und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern;
die Spüländerungsinformationen (r) bereitgestellt werden, um die Wiederholungshäufigkeit und/oder die Gesamtlaufzeit und/oder die RPM [min⁻¹] der Antriebskomponente und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern; und
die Wasserentzugs-Schleuder-Informationen (d) bereitgestellt werden, um die Wiederholungshäufigkeit und/oder die Gesamtlaufzeit und/oder die RPM [min⁻¹] der Antriebskomponente und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern.

5. Steuerverfahren nach Anspruch 4, wobei der Rückmeldungsanforderungsschritt (S2) die Waschänderungsinformationen (w) und/oder die Spüländerungsinformationen (r) und/oder die Wasserentzugs-Schleuder-Informationen (d) als jeweilige Symbole (w1, w2, r1, r2, d1, d2) auf der Anzeigeeinrichtung (130) anzeigt, und
der Rückmeldungseingabeschritt (S3) eine Eingabe für jedes angezeigte Symbol (w1, w2, r1, r2, d1, d2) empfängt, die den Waschänderungsinformationen (w) und/oder den Spüländerungsinformationen (r) und/oder den Wasserentzugs-Schleuder-Informationen (d) entspricht, und
der Änderungsschritt (S6) die Einstellung des bestimmten Programms oder der bestimmten Wahlmöglichkeit, das bzw. die den Waschänderungsinformationen (w) und/oder den Spüländerungsinformationen (r) und/oder den Wasserentzugs-Schleuder-Informationen (d) entspricht, auf der Grundlage der Eingabe jedes angezeigten Symbols (w1, w2, r1, r2, d1, d2) ändert.

6. Steuerverfahren nach Anspruch 5, wobei:
die Wasch-Erhöhungs/Verringerungs-Symbole (w1, w2) konfiguriert sind, die Waschleistung während eines Waschvorgangs durch Ändern der Waschänderungsinformationen (w) zu erhöhen oder zu verringern;
die Spül-Erhöhungs/Verringerungs-Symbole (r1, r2) konfiguriert sind, die Spülleistung während eines Spülvorgangs durch Ändern der Spüländerungsinformationen zu erhöhen oder zu verringern; und
die Wasserentzugs-Schleuder-Erhöhungs/Verringerungs-Symbole (d1, d2) konfiguriert sind, die Wasserentzugs-Schleuder-Leistung während eines Wasserentzugs-Schleuder-Vorgangs durch Ändern der Wasserentzugs-Schleuder-Änderungsinformationen zu erhöhen oder zu verringern.

7. Steuerverfahren nach Anspruch 6, wobei der Änderungsschritt (S6) die Wiederholungshäufigkeit und/oder die Gesamtlaufzeit und/oder die RPM [min⁻¹] der Antriebskomponente und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) Schritt für Schritt erhöht oder verringert, wenn die Wasch-Erhöhungs/Verringerungs-Symbole (w1, w2) und/oder die Spül-Erhöhungs/Verringerungs-Symbole (r1, r2) und/oder die Wasserentzugs-Schleuder-Erhöhungs/Verringerungs-Symbole (d1, d2) eingegeben werden.

8. Steuerverfahren nach Anspruch 1, das ferner einen Vorschauschritt (S4) zum Wiedergeben der geänderten Einstellung des bestimmten Programms oder der bestimmten Wahlmöglichkeit auf der Grundlage einer Eingabe der spezifischen Änderungsinformationen, wenn der Rückmeldungseingabeschritt (S3) durchgeführt wird, umfasst.

9. Steuerverfahren nach Anspruch 8, das ferner einen Bestätigungsschritt (S5) zum Empfangen einer Eingabe eines Befehls, um die geänderte Einstellung des bestimmten Programms oder der bestimmten Wahlmöglichkeit zu bestätigen, von der Eingabekomponente (S150) umfasst.

10. Steuerverfahren eines Online-Systems, das Folgendes umfasst:
einen Server (10) und eine Wäschebehandlungsvorrichtung (1), die ein Kommunikationsmodul (60) enthält, das konfiguriert ist, mit dem Server (10) zu kommunizieren, wobei mehrere Programme oder Wahlmöglichkeiten zum Durchführen eines Waschzyklus zum Entfernen von Fremdstoffen von Wäsche und/oder eines Spülzyklus zum Trennen der Fremdstoffe von einem Waschmittel und/oder eines Schleuderzyklus zum Entfernen von Feuchtigkeit aus der Wäsche und/oder eines Trocknungszyklus zum Entfernen von Feuchtigkeit aus der Wäsche gespeichert sind;
ein externes Endgerät (40), das konfiguriert ist, die Wäschebehandlungsvorrichtung (1) durch Kommunizieren mit dem Server (10) fernzusteuern und eine Anzeigetafel zum Anzeigen von Informationen für einen Benutzer oder Empfangen einer Eingabe eines Befehls enthält,
wobei das Steuerverfahren Folgendes umfasst:
einen Übertragungsschritt (A1), der über das Kommunikationsmodul (60) durchgeführt wird, sobald ein Implementierungsschritt (S1), der ein bestimmtes Programm oder eine bestimmte Wahlmöglichkeit implementiert, abgeschlossen ist, um eine Einstellung des bestimmten Programms oder der bestimmten Wahlmöglichkeit der mehreren Programme oder Wahlmöglichkeiten zu übertragen, wobei die Einstellung darauf beruht, dass der Waschzyklus oder der Trocknungszyklus in der Wäschebehandlungsvorrichtung abgeschlossen ist;
einen Anforderungsschritt (A2), der Änderungsinformationen (C), die bereitgestellt werden, um die Einstellung des bestimmten Programms oder der bestimmten Wahlmöglichkeit zu ändern, auf einer Anzeigetafel des externen Endgeräts (40) anzeigt, wenn die Einstellung empfangen wird;
einen Eingabeschritt (A3), der eine Eingabe der Änderungsinformationen (C) über die Anzeigetafel empfängt;
einen Empfangsschritt (A8), der das bestimmte Programm oder die bestimmte Wahlmöglichkeit, das bzw. die eine geänderte Einstellung auf der Grundlage der Änderungsinformationen (C) aufweist, über das Kommunikationsmodul (60) empfängt; und
einen Ersetzungsschritt (A9), der die Einstellung des bestimmten Programms oder der bestimmten Wahlmöglichkeit, die in der Wäschebehandlungsvorrichtung gespeichert ist, durch die empfangene Einstellung des bestimmten Programms oder der bestimmten Wahlmöglichkeit vom Kommunikationsmodul (60) ersetzt,
wobei die Änderungsinformationen (C) Waschänderungsinformationen (w) und/oder Spüländerungsinformationen (r) und/oder Wasserentzugs-Schleuder-Änderungsinformationen (d) enthalten, wobei die Waschänderungsinformationen (w) durch die Anzeigeeinrichtung (130) als Wasch-Erhöhungs/Verringerungs-Symbole (w1, w2) angezeigt werden, die ein Wascherhöhungssymbol (w1) zum Erhöhen der Waschleistung und ein Waschverringerungssymbol (w2) zum Verringern der Waschleistung enthalten, die Spüländerungsinformationen (r) durch die Anzeigeeinrichtung (130) als Spül-Erhöhungs/Verringerungs-Symbole (r1, r2) angezeigt werden, die ein Spülerhöhungssymbol (r1) zum Erhöhen der Spülleistung und ein Spülverringerungssymbol (22) zum Verringern der Spülleistung enthalten, und die Wasserentzugs-Schleuder-Änderungsinformationen (d) durch die Anzeigeeinrichtung (130) als Wasserentzugs-Schleuder-Erhöhungs/Verringerungs-Symbole (d1, d2) angezeigt werden, die ein Wasserentzugs-Schleuder-Erhöhungssymbol (d1) zum Erhöhen der Wasserentzugs-Schleuder-Leistung und ein Wasserentzugs-Schleuder-Verringerungssymbol (d2) zum Verringern der Wasserentzugs-Schleuder-Leistung enthalten.

11. Steuerverfahren nach Anspruch 10, das ferner Folgendes umfasst:
einen zweiten Übertragungsschritt (A6) zum Übertragen der Änderungsinformationen (C) an den Server (10), wenn die Änderungsinformationen (C) im Eingabeschritt (A3) eingegeben werden; und
einen Bestimmungsschritt (A7) zum Steuern durch den Server (10), die Einstellung des bestimmten Programms oder der bestimmten Wahlmöglichkeit auf der Grundlage der Änderungsinformationen zu ändern,
wobei der Empfangsschritt (A8) die Einstellung des bestimmten Programms und der bestimmten Wahlmöglichkeit, die vom Server (10) übertragen wird, empfängt.

12. Steuerverfahren nach Anspruch 10, das ferner einen Prüfschritt (A5) zum Anzeigen der Einstellung des bestimmten Programms oder der bestimmten Wahlmöglichkeit, die auf der Grundlage der Eingabe der spezifischen Änderungsinformationen im Eingabeschritt (A3) geändert wird, umfasst.

13. Steuerverfahren nach Anspruch 12, das ferner einen Prüfschritt (A5) zum Empfangen einer Eingabe eines Befehls zum Bestätigen oder Ablehnen der geänderten Einstellung des bestimmten Programms oder der bestimmten Wahlmöglichkeit über die Anzeigetafel umfasst.

14. Steuerverfahren nach Anspruch 10, wobei die Wäschebehandlungsvorrichtung eine Wäscheaufnahmekomponente (24) zum Aufnehmen von Wäsche und eine Antriebskomponente (25) zum Drehen der Wäscheaufnahmekomponente umfasst, wobei die Änderungsinformationen (C) die Wiederholungshäufigkeit und/oder die Gesamtlaufzeit und/oder die RPM [min⁻¹] der Antriebskomponente und/oder die Bewegungsgeschwindigkeit der Antriebskomponente, die im Programm oder in der Wahlmöglichkeit eingestellt sind, erhöhen oder verringern.

15. Steuerverfahren des Online-Systems nach Anspruch 11, wobei die Wäschebehandlungsvorrichtung ferner ein Wasserzuführventil (262) umfasst, das konfiguriert ist, der Wäscheaufnahmekomponente (24) Wasser zuzuführen,
wobei:
die Waschänderungsinformationen (w) bereitgestellt werden, um die Wiederholungshäufigkeit und/oder die Gesamtlaufzeit und/oder die RPM [min⁻¹] des Antriebs und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern;
die Spüländerungsinformationen (r) bereitgestellt werden, um die Wiederholungshäufigkeit und/oder die Gesamtlaufzeit und/oder die RPM [min⁻¹] der Antriebskomponente und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern; und
die Wasserentzugs-Schleuder-Informationen (d) bereitgestellt werden, um die Wiederholungshäufigkeit und/oder die Gesamtlaufzeit und/oder die RPM [min⁻¹] der Antriebskomponente und/oder die Bewegungsgeschwindigkeit der Antriebskomponente und/oder die Öffnungszeit des Wasserzuführventils (262) und/oder den Wasserpegel im Inneren der Wäscheaufnahmekomponente (24) zu erhöhen oder zu verringern, und
wobei der Anforderungsschritt (A2) die Waschänderungsinformationen (w) und/oder die Spüländerungsinformationen (r) und/oder die Wasserentzugs-Schleuder-Informationen (d) als jeweilige Symbole (w1, w2, r1, r2, d1, d2) auf der Anzeigeeinrichtung (130) anzeigt, und
der Eingabeschritt (A3) eine Eingabe für jedes angezeigte Symbol (w1, w2, r1, r2, d1, d2) empfängt, die den Waschänderungsinformationen (w) und/oder den Spüländerungsinformationen (r) und/oder den Wasserentzugs-Schleuder-Informationen (d) entspricht, und
der Bestimmungsschritt (A7) die Einstellung des bestimmten Programms oder der bestimmten Wahlmöglichkeit, das bzw. die den Waschänderungsinformationen (w) und/oder den Spüländerungsinformationen (r) und/oder den Wasserentzugs-Schleuder-Informationen (d) entspricht, auf der Grundlage der Eingabe jedes angezeigten Symbols (w1, w2, r1, r2, d1, d2) ändert.

## Revendications

1. Procédé de commande d'un appareil de traitement de linge incluant :
une commande (110) configurée pour mémoriser une pluralité de programmes ou d'options pour exécuter un ou plusieurs cycles parmi un cycle de lavage destiné à éliminer des substances étrangères du linge, un cycle de rinçage destiné à séparer les substances étrangères d'un détergent de lavage, un cycle d'essorage destiné à retirer l'humidité du linge, et un cycle de séchage destiné à retirer l'humidité du linge ;
une partie d'entrée (150) configurée pour recevoir une instruction pour mettre en œuvre un programme ou une option spécifique parmi la pluralité de programmes ou d'options, ou pour changer un réglage du programme ou de l'option spécifique ; et
un affichage (130) configuré pour afficher le réglage ou s'il faut changer le réglage du programme ou de l'option, le procédé de commande comportant :
une étape de mise en œuvre (S1) mettant en œuvre le programme ou l'option spécifique ;
une étape de demande de retour d'information (S2) pour afficher, une fois l'étape de mise en œuvre (S1) terminée, une ou plusieurs informations de changement (C) sur la base du fait que le cycle de lavage, le cycle de rinçage, le cycle d'essorage ou le cycle de séchage est terminé ;
une étape d'entrée de retour d'information (S3) recevant une entrée des informations de changement (C) provenant de la partie d'entrée ; et
une étape de changement (S6) pour changer le réglage du programme ou de l'option spécifique mémorisée dans la commande (110) sur la base de l'entrée des informations de changement,
dans lequel les informations de changement (C) incluent une ou plusieurs informations parmi une information de changement de lavage (w), une information de changement de rinçage (r) et une information de changement de déshydratation-essorage (d), l'information de changement de lavage (w) est affichée par l'affichage (130) sous forme d'icônes d'augmentation/réduction de lavage (w1, w2) incluant une icône d'augmentation de lavage (w1) pour augmenter la performance de lavage et une icône de réduction de lavage (w2) pour réduire la performance de lavage, l'information de changement de rinçage (r) est affichée par l'affichage (130) sous forme d'icônes d'augmentation/réduction de rinçage (r1, r2) incluant une icône d'augmentation de rinçage (r1) pour augmenter la performance de rinçage et une icône de réduction de rinçage (r2) pour réduire la performance de rinçage, et l'information de changement de déshydratation-essorage (d) est affichée par l'affichage (130) sous forme d'icônes d'augmentation/réduction de déshydratation-essorage (d1, d2) incluant une icône d'augmentation de déshydratation-essorage (d1) pour augmenter la performance de déshydratation-essorage et une icône de réduction de déshydratation-essorage (d2) pour réduire la performance de déshydratation-essorage.

2. Procédé de commande selon la revendication 1, dans lequel l'appareil de traitement de linge comporte :
une partie de réception de linge (24) pour recevoir du linge, et
une partie d'entraînement (25) configurée pour faire tourner la partie de réception de linge (24), et
dans lequel des informations de changement (C) sont fournies pour augmenter ou réduire un ou plusieurs éléments parmi la fréquence de répétition, la durée totale, le régime en tours par minute, RPM, de la partie d'entraînement et la vitesse de mouvement de la partie d'entraînement, qui sont réglés dans le programme ou l'option.

3. Procédé de commande selon la revendication 2, dans lequel l'appareil de traitement de linge comporte en outre : une vanne d'alimentation en eau (262) configurée pour fournir de l'eau à la partie de réception de linge (24), et
les informations de changement (C) sont fournies pour augmenter ou réduire un ou plusieurs élément parmi le temps d'ouverture de la vanne d'alimentation en eau (262) et le niveau d'eau à l'intérieur de la partie de réception de linge (24).

4. Procédé de commande selon la revendication 3, dans lequel :
l'information de changement de lavage (w) est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24) ;
l'information de changement de rinçage ^{®} est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24) ; et
l'information de changement de déshydratation-essorage (d) est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24).

5. Procédé de commande selon la revendication 4, dans lequel l'étape de demande de retour d'information (S2) affiche une ou plusieurs informations parmi l'information de changement de lavage (w), l'information de changement de rinçage (r) et l'information de déshydratation-essorage (d) sous forme d'icônes (wl, w2, rl, r2, d1, d2) respectives sur l'affichage (130), et
l'étape d'entrée de retour d'information (S3) reçoit une entrée pour chaque icône affichée (w1, w2, r1, r2, d1, d2) correspondant à une ou plusieurs informations parmi l'information de changement de lavage (w), l'information de changement de rinçage ^{®} et l'information de déshydratation-essorage (d), et
l'étape de changement (S6) change le réglage du programme ou de l'option spécifique correspondant à l'information ou aux informations parmi l'information de changement de lavage (w), l'information de changement de rinçage (r) et l'information de déshydratation-essorage (d) sur la base de l'entrée de chaque icône affichée (w1, w2, r1, r2, d1, d2).

6. Procédé de commande selon la revendication 5, dans lequel :
les icônes d'augmentation/réduction de lavage (w1, w2) sont configurées pour augmenter ou réduire la performance de lavage pendant un processus de lavage en changeant l'information de changement de lavage (w) ;
les icônes d'augmentation/réduction de rinçage (r1, r2) sont configurées pour augmenter ou réduire la performance de rinçage pendant un processus de rinçage en changeant l'information de changement de rinçage ; et
les icônes d'augmentation/réduction de déshydratation-essorage (dl, d2) sont configurées pour augmenter ou réduire la performance de déshydratation-essorage pendant un processus de déshydratation-essorage en changeant l'information de changement de déshydratation-essorage.

7. Procédé de commande selon la revendication 6, dans lequel l'étape de changement (S6) augmente ou réduit un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24), étape par étape, lorsqu'au moins une des icônes d'augmentation/réduction de lavage (w1, w2), des icônes d'augmentation/réduction de rinçage (r1, r2) ou des icônes d'augmentation/réduction de déshydratation-essorage (d1, d2) est entrée.

8. Procédé de commande selon la revendication 1, comportant en outre une étape de prévisualisation (S4) pour refléter le réglage changé du programme ou de l'option spécifique sur la base d'une entrée de l'information de changement spécifique, lorsque l'étape d'entrée de retour d'information (S3) est réalisée.

9. Procédé de commande selon la revendication 8, comportant en outre une étape d'approbation (S5) pour recevoir une entrée d'une instruction pour approuver ou refuser le réglage changé du programme ou de l'option spécifique à partir de la partie d'entrée (S150).

10. Procédé de commande d'un système en ligne incluant un serveur (10) et un appareil de traitement de linge (1) comportant un module de communication (60) configuré pour communiquer avec le serveur (10), dans lequel une pluralité de programmes ou d'options pour exécuter un ou plusieurs cycles parmi un cycle de lavage destiné à éliminer des substances étrangères du linge, un cycle de rinçage destiné à séparer les substances étrangères d'un détergent de lavage, un cycle d'essorage destiné à retirer l'humidité du linge et un cycle de séchage destiné à retirer l'humidité du linge, sont mémorisés ; un terminal externe (40) configuré pour commander à distance l'appareil de traitement de linge (1) en communiquant avec le serveur (10) et incluant un panneau d'affichage pour afficher des informations à un utilisateur ou recevoir une entrée d'une instruction, le procédé de commande comportant :
une étape de transmission (A1) réalisée, une fois qu'une étape de mise en œuvre (S1) mettant en œuvre un programme ou une option spécifique est terminée, via le module de communication (60), pour transmettre un réglage du programme ou de l'option spécifique de la pluralité de programmes ou d'options, dans lequel le réglage est basé sur le fait que le cycle de lavage ou le cycle de séchage est terminé dans l'appareil de traitement de linge ;
une étape de demande (A2) affichant une information de changement (r), qui est fournie pour changer le réglage du programme ou de l'option spécifique, sur un panneau d'affichage du terminal externe (40), lorsque le réglage est reçu ;
une étape d'entrée (A3) recevant une entrée de l'information de changement (r) via le panneau d'affichage ;
une étape de réception (A8) recevant le programme ou l'option spécifique ayant le réglage changé sur la base de l'information de changement (r) via le module de communication (60) ; et
une étape de remplacement (A9) remplaçant le réglage du programme ou de l'option spécifique mémorisé dans l'appareil de traitement de linge, par le réglage reçu du programme ou de l'option spécifique du module de communication (60),
dans lequel les informations de changement (C) incluent une ou plusieurs informations parmi une information de changement de lavage (w), une information de changement de rinçage (r) et une information de changement de déshydratation-essorage (d), l'information de changement de lavage (w) est affichée par l'affichage (130) sous forme d'icônes d'augmentation/réduction de lavage (w1, w2) incluant une icône d'augmentation de lavage (w1) pour augmenter la performance de lavage et une icône de réduction de lavage (w2) pour réduire la performance de lavage, l'information de changement de rinçage (r) est affichée par l'affichage (130) sous forme d'icônes d'augmentation/réduction de rinçage (r1, r2) incluant une icône d'augmentation de rinçage (r1) pour augmenter la performance de rinçage et une icône de réduction de rinçage (r2) pour réduire la performance de rinçage, et l'information de changement de déshydratation-essorage (d) est affichée par l'affichage (130) sous forme d'icônes d'augmentation/réduction de déshydratation-essorage (d1, d2) incluant une icône d'augmentation de déshydratation-essorage (d1) pour augmenter la performance de déshydratation-essorage et une icône de réduction de déshydratation-essorage (d2) pour réduire la performance de déshydratation-essorage.

11. Procédé de commande selon la revendication 10, comportant en outre :
une seconde étape de transmission (A6) pour transmettre l'information de changement ^{©} au serveur (10), lorsque l'information de changement (C) est entrée à l'étape d'entrée (A3) ; et
une étape de détermination (A7) pour commander, par le serveur (10), de changer le réglage du programme ou de l'option spécifique sur la base de l'information de changement,
dans lequel l'étape de réception (A8) reçoit le réglage du programme et de l'option spécifique transmis par le serveur (10).

12. Procédé de commande selon la revendication 10, comportant en outre une étape de contrôle (A5) pour afficher le réglage du programme ou de l'option spécifique qui est changé sur la base de l'entrée de l'information de changement spécifique à l'étape d'entrée (A3).

13. Procédé de commande selon la revendication 12, comportant en outre une étape de contrôle (A5) pour recevoir une entrée d'une instruction pour approuver ou refuser le réglage changé du programme ou de l'option spécifique via le panneau d'affichage.

14. Procédé de commande selon la revendication 10, dans lequel l'appareil de traitement de linge comporte une partie de réception de linge (24) pour recevoir du linge ; et une partie d'entraînement (25) pour faire tourner la partie de réception de linge, dans lequel l'information de changement (C) augmente ou réduit un ou plusieurs éléments parmi la fréquence de répétition, la durée totale, le RPM de la partie d'entraînement et la vitesse de mouvement de la partie d'entraînement, qui sont réglés dans le programme ou l'option.

15. Procédé de commande du système en ligne selon la revendication 11, dans lequel l'appareil de traitement de linge comporte en outre une vanne d'alimentation en eau (262) configurée pour fournir de l'eau à la partie de réception de linge (24),
dans lequel :
l'information de changement de lavage (w) est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24) ;
l'information de changement de rinçage (r) est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24) ; et
l'information de changement de déshydratation-essorage (d) est fournie pour augmenter ou réduire un ou plusieurs éléments parmi la fréquence de répétition, la durée totale, le RPM de la partie d'entraînement, la vitesse de mouvement de la partie d'entraînement, le temps d'ouverture de la vanne d'alimentation en eau (262) et le niveau d'eau à l'intérieur de la partie de réception de linge (24), et
dans lequel l'étape de demande (A2) affiche une ou plusieurs informations parmi l'information de changement de lavage (w), l'information de changement de rinçage (r) et l'information de déshydratation-essorage (d) sous forme d'icônes (w1, w2, r1, r2, d1, d2) respectives sur l'affichage (130), et
l'étape d'entrée (A3) reçoit une entrée pour chaque icône affichée (w1, w2, r1, r2, d1, d2) correspondant à une ou plusieurs informations parmi l'information de changement de lavage (w), l'information de changement de rinçage (r) et l'information de déshydratation-essorage (d), et
l'étape de détermination (A7) change le réglage du programme ou de l'option spécifique correspondant à une ou plusieurs informations parmi l'information de changement de lavage (w), l'information de changement de rinçage (r) et l'information de déshydratation-essorage (d) sur la base de l'entrée de chaque icône affichée (w1, w2, r1, r2, d1, d2).
